# EUROPEAN PATENT APPLICATION

(11) **EP 2 930 153 A1**
(43) Date of publication of application: **14.10.2015**
(21) Application number: 15162553.0
(22) Date of filing: 07.04.2015
(51) Int. Cl.: C02F 11/12, B09B 3/00, F26B 5/04

(54) **DEVICE FOR THE TREATMENT OF ORGANIC MATERIAL**

(30) Priority: 07.04.2014 IT AN20140056
(71) Applicant: Nest S.r.l., 60044 Fabriano (AN) (IT)
(72) Inventor: Santini, Stefano, 60044 Fabriano AN (IT); Carnevali, Renzo, 60044 Fabriano AN (IT); Santini, Francesco, 60044 Fabriano AN (IT); Ciappelloni, Domenico, 60044 Fabriano AN (IT)
(74) Representative: Ercolani, Simone Pietro

(57) **Abstract**

The present invention relates to a device (A) for treating organic material, comprising a first housing compartment (B) to house organic material; a second compartment (D) fluid-dynamically connected to the first compartment (B) by means of a closed circuit. The device further comprises at least one actuator (C) adapted to lead the inside of the first compartment (B) to a pressure lower than the inside of the second compartment (D). The pressure gap between the inside of the first compartment (B) and the inside of the second compartment (D) is such to cause the evaporation of at least one portion of the liquid fraction of the organic material housed in the first compartment (B) and the consequent separation of the liquid fraction from the solid fraction of the organic material, as well as the condensation of the evaporated liquid fraction in the second compartment (D). The present invention further relates to a method for treating organic material.

## Description

### Technical field

The present invention relates to a device for treating organic material which can be applied in domestic and professional environment, as well as to a method for treating organic material which can be implemented, for example, by means of the afore said device.

### Known art

The amount of municipal solid wastes (MSW) produced in the European Union grows year by year and its volume represents one of the parameters with which the sustainability degree of our life standard is measured.

Most of it is "wasted" whereas a deeper commitment is needed in order to minimize the amount of produced MSW and maximize the amount of recycled MSW. 2008/98/CE Regulation provides an overview of definitions and criteria for managing the MSW. In particular, it introduces a new hierarchy in the waste management system: prevention, reuse, recycle, recovery and disposal.

The key concept of the mentioned regulation is the "Pre-Waste" prevention of wastes and it is the first action the member States have to promote in order to favor the MSW reduction, by adopting policies and rules aimed to prevent the waste formation starting from the design of both the product and its packaging.

In order to solve the bulk problem the vacuum technology has been employed in order to create an environment having a pressure lower than the atmospheric one, to collect organic wastes by causing a volume reduction thereof. Examples of such an application of the vacuum technology are object of the patent Applications WO2013/005236 and WO2008/113990.

### Technical problem

The Applicant verified that the aforesaid applications, while being effective in order to reduce the bulk of organic wastes, have the drawback of not being as much effective in significantly reducing the putrescence and thus the bad smell.

In addition, the so obtained material is not easily suitable for being used as compost and least of all as Secondary Solid Fuel as provided for by the Legislative Decree 205/2010.

### Characteristics of the invention

It is therefore an object of the present invention to solve the afore mentioned technical problems by means of a device for treating organic material which, in addition to reduce the volume thereof, causes a reduction of the intrinsic hygroscopicity by making it substantially inert and odorless.

Such technical problems are solved according to the invention by means of a device for treating organic material comprising:
a first housing compartment to house said organic material;
a second compartment fluid-dynamically connected to the first compartment by means of a closed circuit;
at least one actuator adapted to lead the inside of the first compartment to a pressure lower than the inside of the second compartment, the pressure gap between the inside of the first compartment and the inside of the second compartment being such to cause:
   - the evaporation of at least one portion of the liquid fraction of the organic material housed in the first compartment and the consequent separation of such a liquid fraction from the solid fraction of the organic material;
   - the condensation of the evaporated liquid fraction in the second compartment.

Advantageously, the device according to the invention is such that the first compartment is connected with heating means adapted to facilitate the evaporation of at least one portion of the liquid fraction of the organic material.

Advantageously, the device comprises a containment casing, the first compartment is placed inside the containment casing and the containment casing and the first compartment are thermally insulated from one another by means of application of insulating material, preferably polyurethane or polystyrene foam.

Advantageously, the actuator comprises a vacuum pump or a compressor, to whom a compression chamber is preferably connected.

Advantageously, the device according to the invention also comprises at least one sensor device in particular applied to the first compartment and/or to the second compartment, and preferably comprises a humidity sensor and/or a temperature sensor and/or a pressure sensor: the first compartment and the second compartment are connected with one another by means of at least one pair of valves able to achieve a first condition in which the first and the second compartment are fluid-dynamically connected one to another and a second condition in which the first and the second compartment are fluid-dynamically separated one from another, the switching from the first condition to the second condition and/or from the second condition to the first condition might be carried out depending on the detection of the sensor device.

Advantageously, the device according to the invention also comprises a recovery tank connected to the second compartment and adapted to collect the liquid fraction of the organic material condensed in the second compartment, wherein the recovery tank is preferably removable from the device in order to allow the disposal of the liquid fraction therein contained.

Advantageously, the device according to the invention comprises at least one access opening to the first compartment, the opening can be sealingly occluded by means of a cover, preferably the seal being made by means of a gasket applied at the interface between the opening and the cover.

The organic material is advantageously contained in the first compartment inside at least one container, removable from the first compartment through the access opening.

The technical problems at the base of the invention are solved also by means of a method for treating organic material, comprising the steps of:
a) arranging the organic material in a first housing compartment;
b) evaporating at least one portion of the liquid fraction of the organic material;
c) transferring the liquid fraction in the vapor state from the first housing compartment to a second housing compartment;
d) condensing the liquid fraction in the second housing compartment;
e) drawing the residual solid fraction out from the first housing compartment;
f) drawing the condensed liquid fraction out from the second housing compartment.

Preferably, the step f) of the method according to the invention comprises the sub-steps of:
f1) collecting the liquid fraction in the second housing compartment;
f2) channeling the liquid fraction in a recovery tank connected to the second housing compartment;
f3) disconnecting the recovery tank from the second housing compartment;
f4) removing the liquid fraction from the recovery tank.

### Brief Description of the Figures

These and further optional characteristics of the invention will be more evident from the following description and the accompanying figures wherein:
figure 1 depicts a functional layout of a device implementing the present invention;
figure 2 depicts a sectional view of a device implementing the present invention;
figure 3 depicts an exploded view of a device implementing the present invention.

### Detailed description of some embodiments of the present invention

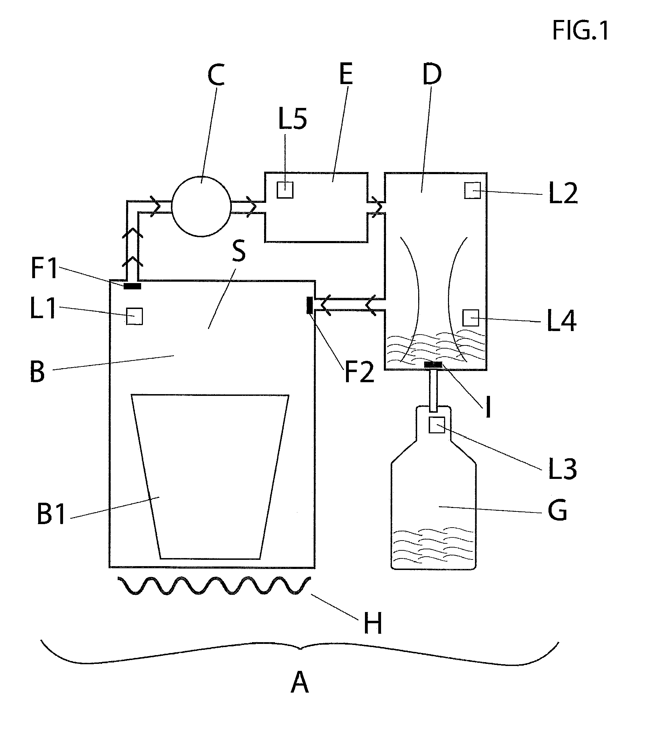

In figure 1 a device A for treating the organic material conceived for being used both in built in and free installation condition is represented, as well as designed for uses of common, family type, and sized for such objects.

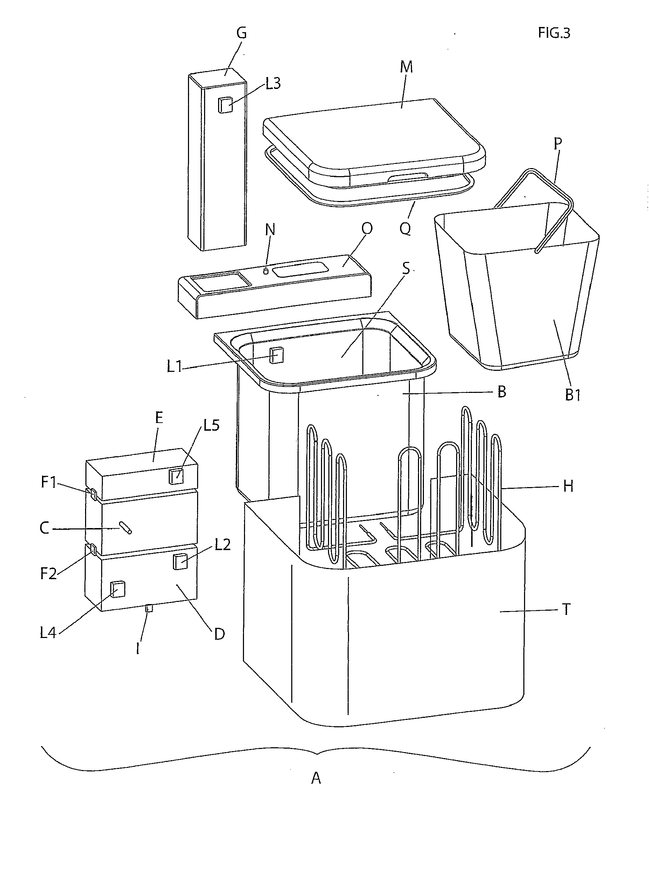

The device A comprises a first housing compartment B to house the organic material obtained by means of a recess inside an advantageously free-standing casing. In particular, as shown in figures 1 and 3, according to the embodiment herein described, the first compartment B has a substantially hollow parallelepiped shape, with rounded edges, and is preferably realized in a rigid plastic material. It has to be noted however that other shapes and other materials can be employed without thereby departing from the protection scope of the present invention.

The device A uses the vacuum combination in order to create the environmental condition for which the liquid fraction of the organic material is prone to dissociation from the solid fraction by evaporation; the vapor created in the housing compartment B, once a given humidity has been reached, is transferred by means of an actuator C and due to a suitable duct, into a compartment D having such an inner geometry to create a Venturi effect and having a capacity of 2.5 liters with consequent increase of vapor pressure, which allows it to return to the liquid state. In particular, it has to be pointed out that the internal geometry of the compartment D, as said afore, is shaped such to facilitate the return of the vapor being upstream of the same compartment D, since implemented so as to increase the speed in proximity of the inlet of the compartment D, through a suitable convergent device, and thus to reduce the respective fluid pressure at that section. This way the flow rate of the fluid entering the compartment D can be increased. In addition it has to be noted that, despite herein and in the following it has been stated that the capacity of the compartment D is of 2.5 liters, however a device provided with a compartment D having capacity higher or lower than 2.5 liters still falls within the protection scope of the present invention.

The actuator C is a pump adapted to create vacuum until -950 mbars and designed for suctioning and drawing liquids with capacity relating to the intended use of the device (from the family use up to 50 liters/h to the professional use up to 200 liters/h). Note that, in any case in other embodiments of the invention herein not described, both the flow rate and vacuum creating capability of the pump C can also be different with respect to the afore mentioned values.

Between the actuator C and the compartment D a pre-compression compartment E is advantageously interposed. In an alternative embodiment of the invention herein not shown, such a pre-compression compartment E is not present; such an embodiment is therefore easier from a structural point of view and also easier to assemble/disassemble.

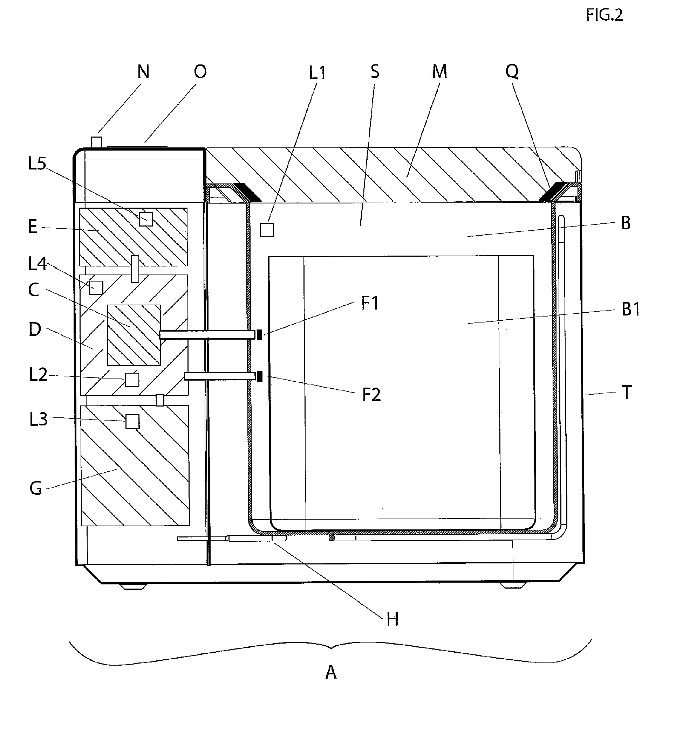

The fluid transfer among various compartments is adjusted by a suitable set of valves F1, F2 electronically driven and controlled. In the embodiment herein described and shown, the valves are two F1, F2, and are arranged respectively at the duct connecting the compartment B to the pump C and at the additional duct connecting the compartment D to the compartment B (see figures 1 and 2). Such valves F1 and F2 can be, for example, of solenoid or equivalent type.

A collecting tank G of the liquid fraction is advantageously in communication with the compartment D through a sealing valve L3. Such a valve can be of solenoid type. Again, the compartment D is connected to the compartment B by means of an additional duct at which there is the valve F2, as mentioned.

In practice, therefore, the compartment B and the compartment D are fluidically connected one to another by means of a closed circuit, i.e. without vapor vents outside the device A. In practice, the connection between the compartment B and the compartment D is obtained by means of two ducts distinct one from another and not fluidically connected with the environment outside the device A, at least in the normal operating conditions.

The device A is controlled by a system of electronically driven sensors L1, L2, L3, L4, L5 which advantageously identify the pressure, temperature and humidity level of the compartment B, the compartment D, the compartment E and the collecting tank G.

However, it has to be noted that in an alternative embodiment of the invention the number of sensors can also be less than five. For example, in an embodiment herein not shown, the device A comprises only one humidity sensor L1 which is placed inside the compartment B. In practice, such a sensor L1 still allows the correct operation of the device A since, from the humidity measurement obtained by the sensor L1, the operation of both the pump C and the valves F1 and F2 is controlled. Advantageously, the dissociation of the liquid fraction through evaporation, occurring by means of the depression in said first compartment B by the actuator C, is assisted by the heat supply.

Such a supply occurs through a resistance H having circular section and suitably shaped for wrapping the compartment B from the bottom to the side walls up to ¼ of the height of the compartment B.

The resistance H, which can be implemented by means of a serpentine coil powered by electrical current at a given intensity, has a power that will allow reaching a temperature of +40°C in the compartment B, with an energetic contribution adequate to increase the environment temperature to said value.

Said resistance H does not significantly impair the electrical consumptions, it actually accelerates the separation process of the liquid from the solid fraction.

In figure 2 a device A is represented in section, wherein the cycle occurs in a closed circuit composed of two housing compartments B and D communicating through ducts adjusted by solenoid valves.

The housing compartment B to house the organic material is designed for accommodating a bucket B1 which can be the same as the one provided by the municipality, adapted to receive the organic content; the user can hold the habit of using both the biodegradable plastic bag and the paper bag for protection.

The cover M is for tightly sealing the compartment B and is placed over the same. A gasket Q in integrated with the cover M to ensure the cover M to be coupled and sealed on the compartment B. The cover M is assembled on the structure of the device A with a reversible fastening which allows the rotation thereof in opening and closing steps.

The user gives the organic content in the bag placed in the bucket B1 inside the housing compartment B, after the cover M has been opened.

Depending on the habits and the filling level of the bucket B1, the user closes the cover M and activates the treatment process by means of an ON/OFF button N placed on the control panel O; this consent activates the process the user can not stop unless acting on the ON/OFF button N placed on the control panel O.

Once a maximum vacuum level up to -950 mbars and a temperature of +40°C has been reached, the system of sensors L1, L2, L3, L4, L5 stops the operation of the actuator C and the resistance H; due to the housing compartment B being designed for working in depression, the step of evaporation of the liquid fraction from the organic content goes on. It has to be noted that the temperature to which the compartment B is led can also be different from 40°C, for example comprised between 30 and 50°C, without thereby departing from the protection scope of the present invention.

Once a given humidity level has been reached, such as for example for illustration purposes only of 95%, a sensor L1 gives the consent to the actuator C which allows the vapor transfer from the housing compartment B to the compartment D aiding the condensation due to the pressure differential between the two compartments.

Then the valve F2, of the solenoid type, placed between the housing compartment B and the compartment D, allows the air inflow in the housing compartment B to balance the circuit pressure.

According to a preferred embodiment of the invention, during the vapor transfer from the compartment B to the compartment D, the valve F1 is still open just for allowing vapor passing from the compartment B to the compartment D. Subsequently, always according to such a preferred embodiment of the invention, when the humidity inside the compartment B drops under a given value, for example of 40%, the valve F1 closes and the pump C stops its operation. Always according to the afore mentioned preferred embodiment of the invention, the opening of the valve F2 can occur, for example, at the moment in which pressure and/or humidity inside the compartment D reach a preset given value. In this step the valve F1 remains closed and opens again at the activation of the pump C.

The cycle repeats until an overflow sensor L4 placed in the compartment D, for example a level sensor, allows outflowing the condensed liquid fraction into a collecting tank G.

When the collecting tank G has reached a given filling level, an overflow sensor L3 placed in the inside thereof, for example an additional level sensor, reports on the control panel O the need of emptying the same.

In case the collecting tank G should not be emptied and the overflow sensor L4 placed in the compartment D would activate since the maximum filling level has been reached, the cycle stops for safety and the device A switches to the stand-by mode.

The device A will carry out a number of cycles repeatedly until the environmental humidity of the housing compartment B will not undergo a sensible variation given during the evaporation process; when this condition is met the cycle is considered as ended.

The user can open the cover M and select to remove the dried organic content or, if the volume available in the bucket B1 allows it, can select to give more organic material over the previously dried organic content and reactivate the cycle of the device A every time it will be advisable for him, until the total filling of the bucket B1.

The user will have a dried organic material available with a calorific value that he will be able to use as secondary solid fuel (SSF), as fertilizer (compost) or he will be able to give it to the waste separation system, which will use it in the modalities provided for by the collection valorization system.

The so-conceived device A, and in particular in its easiest embodiment comprising a first housing compartment B to house the organic material, a second compartment D fluid-dynamically connected to the first compartment B by means of a closed circuit; an actuator C adapted to lead the inside of the first compartment B to a pressure lower than the inside of the second compartment D, wherein the pressure gap between the inside of the first compartment B and the inside of the second compartment D is such to cause:
- the evaporation of a portion of the liquid fraction of the organic material housed in the first compartment B and the consequent separation of such a liquid fraction from the solid fraction of the organic material; and
- the condensation of the evaporated liquid fraction in the second compartment D, allows obtaining multiple results;

it has remarkable advantages with respect to the known art devices.

In particular, differently from such devices of the known art usually having an open circuit, i.e. wherein the vapor reaching the second compartment D is purged in the environment, the device A is a closed circuit. This results in remarkable advantages in terms of energy saving since, due to this closed circuit solution, the heat of the vapor reentering the compartment A from the compartment D can be recovered, thus remarkably reducing the consumptions of the resistance H for keeping the compartment B at the constant temperature of about 40°C.

In figure 3 the exploded view of a device A is represented, wherein a compartment B is depicted with a capacity referred to the intended use (for family up to 12 liters and professionals up to 100 liters) internally composed of plastic or metal (ferrous or aluminium) material integral through a polyurethane or polystyrene foaming to the outer surface in plastic or metal (ferrous or aluminium) material, defining a containment casing T. The compartment B is structurally free-standing, accessible from the top and tight sealed.

The resistance H is electrical and tubular, shaped to be co-foamed and contacting with the walls of the compartment B. It has to be reported however that in an alternative embodiment of the invention any heating form adapted to lead the compartment B to the required temperatures can be employed.

The cover M is made internally of a plastic or metal (ferrous or aluminium) material integral, through a polyurethane or polystyrene foaming, to the outer surface in plastic or metal (ferrous or aluminium) material.

A gasket Q made of rubber material is placed peripherally on the lower surface of the cover M coupled to the compartment B.

The bucket B1 for collecting the organic material, made of plastic material, corresponds or is similar to the one supplied to the user by the municipality. The bucket B1 can be advantageously removed from the housing compartment B by means of the handle P which allows the user emptying it from the solid fraction resulting from the treatment of the organic material and then inserting it again into the housing compartment B for a following filling with organic material to be treated.

The actuator C is a vacuum pump adapted for suctioning air and liquids and operates with a piston mechanism. The fastening to the device is carried out reversibly and with a solution which reduces vibrations and noise. It has to be noted that in an alternative embodiment the vacuum pump can also comprise any compressor still able to reach highly low pressures and, thus, close to vacuum.

The compression compartment D is made of plastic or metal (ferrous or aluminium) material having such a thickness to resist against the compression forces applied during the operation in the closed circuit. In a preferred embodiment, such compartment D can also comprise a vent valve in case the vapor pressure inside the compartment D would exceed a value deemed critical for the user.

The pre-compression compartment E is made of plastic or metal (ferrous or aluminium) material having such a thickness to resist against the compression forces applied during the operation in the closed circuit.

The collecting tank G of the liquid fraction is made of plastic or metal (ferrous or aluminium) material. The collecting tank G is advantageously removable from the device A in order to allow the user emptying it from the liquid fraction resulting from the treatment of the organic material, and then inserting it again in the device A for a subsequent filling.

The control panel O is made of plastic or metal (ferrous or aluminium) material.

The connections between the compartment B, the actuator C, the compartment D and the compartment E are implemented by hoses, i.e. ducts, in silicon material or plastic-metal composite or other anyway suitable materials.

The Legislative Decree 205/2010 has recently modified and completed the Legislative Decree 152/2006 "Norme in materia di ambiente", which is the reference rule in the matter, and the part IV is the reference one concerning MSWs. Main contents are:
- Definition of waste concept.
- Introduction of criteria for identifying materials that can not be classified as wastes.
- Definition of Secondary Raw Material (SRM) concept.
- Definition of Byproduct concept.
- Definition of Recovery Product concept.
- Definition of recovery, recycling, preparation for reuse, reuse and treatment concept.
- Introduction of compulsory separate collection of organic wastes and green with definition of compost and composting concepts.
- Setting up of Planning Agreements with public institutions, field companies, public or private subjects and professional organizations in order to increase the separate collection and improve the waste managing system.
- Setting up of production-chains Associations for managing wastes with nonprofit legal entity governed by private low, in which recoverers and recyclers can take part.

According to EUROSTAT 2010 information about 252.5 millions of MSW have been produced in EU27.

According to ISPRA (Istituto Superiore per la Prevenzione e la Ricerca) report in 2010 about EU waste evolution, the MSW production in Italy grows steadily in step with the increase of the GDP and the households expenses, reaching 32.5 millions of tons.

Section 181 of the Legislative Decree 205/2010 sets in 2020 the year by which all the Municipalities will have to provide a separate waste collection for the reuse and recycle of at least 50% in terms of MSW weight, in particular for paper, metal, plastic, glass and wood contents.

The amounts of wastes produced by the separate collection (SC) reached in 2011 (2nd Report on Separate Recovery) the value of 9.9 millions of tons equal to about 32% of total MSW, still far from the target set for 2020.

In particular, the separate collection (SC) fraction is equal to 9,959,179 Tons and the organic material represents 35%.

The organic material (FORSU Frazione Organica del Rifiuto Solido Urbano) today is treated in the composting plants; since twenty years in Italy operates the CIC, Consorzio Italiano Compostatori, nonprofit organization which collaborates with the Public Institutions in charge by law to promote and prosecute the waste reducing policy, the actuation of SC for the separation, processing, recycling and valorization of biomasses and, in general, of the compostable organic contents.

The target of the composting process is to obtain a metastable material, not subject to further sudden biological evolutions and compatible as farming organic soil conditioner.

Such operations result in a first transportation to the collection point, the storing, the second transportation from the collecting point to the composting plants and thus the treatment in order to obtain the compost.

The just mentioned operations are very expensive and the work done for separating the organic material is carried out in poor conditions and in foul-smelling environments due to the putrescence of the organic material.

The target of drying the organic material at the "family production" stage, sensibly reduces the costs of the composting chain, reduces the volume and bad smell of the organic material still keeping unchanged the habits of the users' family.

The Applicant verified that by testing an amount of organic material of 3.5 Kg obtained by mixing different product range fractions in the following percents obtained by a survey about the FORSU composition in Italy:

| | % |
|---|---|
| Pasta rice | 25 |
| Vegetables | 35 |
| Fruits | 20 |
| Meat | 10 |
| Bread | 10 |
| Total | 100 |

Once the drying cycle from the initial amount of organic material (1.5 kg) ends, the following have been obtained:
   - A liquid fraction of about 1.200 Kg
   - A dried solid fraction of 0.300 Kg

The dried solid fraction has been analyzed at the laboratory of the Centro di Ricerca Biomasse (CRB) in Perugia; by document CRB-13-RT-10-B-1 of December 16, 2013 the following composition is certified:

| Assay type | Values | | Instrumentation | Relevant Regulations |
|---|---|---|---|---|
| Moisture content | 5.46 | % wb | TGA 701 Leco | UNI EN 14774-2 |
| Ashes | 7.31 | % wb | TGA 701 Leco | UNI EN 14775 |
| Volatile substances | 82.07 | % wb | TGA 701 Leco | UNI EN 15148 |
| Carbon content | 34.8 | % wb | Truspec CHN Leco | UNI EN 15104 |
| Hydrogen content | 6.39 | % wb | Truspec CHN Leco | UNI EN 15104 |
| Nitrogen content | 2.35 | % wb | Truspec CHN Leco | UNI EN 15104 |
| PCS | 15.95 | MJ/Kg wb | AC 350 Leco | UNI EN 14918 |
| PCI | 14.64 | MJ/Kg wb | AC 350 Leco | UNI EN 14918 |

The so obtained solid fraction and with the characteristics found by the CRB laboratory, can be used as "secondary solid fuel" as intended by the Ministerial Decree issued by the Ministry of the Environment and protection of land and sea n° 22 of February 14, 2013, published in the Official Gazette of March 14, 2013.

The user behaves similarly to the use habits of the current systems for the separate collection of the organic content (FORSU).

The device treats the organic material so that to significantly reduce the volume and weight thereof (FORSU compositional matrix with dried projections).

The device treats the organic material so that to make it odorless and not subjected to subsequent putrescence steps.

The device treats the organic material so that to make it inert and provided, since now, with low hygroscopicity.

The solid fraction resulting from the treatment in the device has a very low moisture fraction and can be considered secondary raw material both as compost and biomass, given its calorific value equivalent to a secondary solid fuel (SSF).

The liquid fraction resulting from the treatment in the device is a liquid equivalent to water from the mains and can be thereby spilled in the white waters system.

The device takes advantage from thermo-fluid-dynamic principles such to absorb a very little amount of energy; in addition, the user can responsibly activate the device in the low-cost time slots.

## Claims

1. Device (A) for the treatment of organic material comprising:
a first housing compartment (B) to house said organic material;
a second compartment (D) fluid-dynamically connected to said first compartment (B) by means of a closed circuit;
at least one actuator (C) adapted to lead the inside of said first compartment (B) to a pressure lower than the inside of said second compartment (D), the pressure gap between the inside of said first compartment (B) and the inside of said second compartment (D) being such to cause:
- the evaporation of at least one portion of the liquid fraction of said organic material housed in said first compartment (B) and the consequent separation of such a liquid fraction from the solid fraction of said organic material and
- the condensation of said evaporated liquid fraction in said second compartment (D).

2. Device according to claim 1, wherein said first compartment (B) is connected to heating means (H) adapted to facilitate the evaporation of at least one portion of the liquid fraction of said organic material, said heating means (H) comprising at least one electric resistance housed in said device (A) adjacent to said first compartment (B), said at least one electric resistance preferably wrapping said first compartment (B) around.

3. Device according to any one of the preceding claims, wherein said actuator (C) comprises a vacuum pump or a compressor, the delivery of said vacuum pump being preferably connected to a compression chamber (E).

4. Device according to any one of the preceding claims, further comprising at least one sensor device (L1, L2, L3, L4, L5), said at least one sensor device (L1, L2, L3, L4, L5) being in particular applied to said first compartment (B) and/or to said second compartment (D) and preferably comprising a humidity sensor and/or a temperature sensor and/or a pressure sensor, wherein said first compartment (B) and said second compartment (D) are connected with one another by means of at least one pair of valves (F1, F2), said valves being able to achieve a first condition in which said first compartment (B) and said second compartment (D) are fluid-dynamically connected one to another and a second condition in which said first compartment (B) and said second compartment (D) are fluid-dynamically separated one from another, the switching from said first condition to said second condition and/or from said second condition to said first condition might be carried out depending on at least one parameter detected by said sensor device (L1, L2, L3, L4, L5).

5. Device according to any one of the preceding claims, wherein said device (A) further comprises a recovery tank (G) connected to said second compartment (D) and adapted to collect the liquid fraction condensed from said organic material in said second compartment (D), wherein said recovery tank (G) is preferably removable from said device (A) in order to allow the disposal of the liquid fraction contained therein and wherein at least one sensor (L3) of the filling level is in particular applied to said recovery tank (G) and is operatively connected to said actuator (C) so as to stop the operation thereof when a pre-determined condition is achieved.

6. Device according to any one of the preceding claims, comprising a containment casing (T), said first compartment (B) being placed inside said containment casing (T) and said containment casing (T) and first compartment (B) being thermally insulated from one another by means of interposition of insulating material, preferably polyurethane or polystyrene foam.

7. Device according to any one of the preceding claims, comprising at least one access opening (S) to said first compartment (B), said opening can be sealingly occluded by means of a cover (M), preferably said seal being made by means of a gasket (Q) applied at the interface between said opening and said cover (M).

8. Device according to claim 7, wherein said organic material is contained in said first compartment (B) within at least one container (B1) removable from said first compartment (B) through said access opening (S).

9. Method for treating organic material, comprising the steps of:
a) arranging the organic material in a first housing compartment (B);
b) evaporating at least part of the liquid fraction of said organic material;
c) transferring said liquid fraction in the vapor state from said first housing compartment (B) to a second housing compartment (D);
d) condensing said liquid fraction in said second housing compartment (D);
e) drawing the residual solid fraction out from said first housing compartment (B);
f) drawing the condensed liquid fraction out from said second housing compartment (D).

10. Method according to claim 9, wherein said step f) comprises the sub-steps of: f1) collecting said liquid fraction in said second housing compartment (D); f2) channeling said liquid fraction to a recovery tank (G) connected to said second housing compartment (D); f3) disconnecting said recovery tank (G) from said second housing compartment (D); and f4) removing said liquid fraction from said recovery tank (G).
